(19) Europäisches Patentamt
European Patent Office
Office européen des brevets

(11) **EP 2 921 840 A1**

(12) **EUROPEAN PATENT APPLICATION**

(43) Date of publication:
**23.09.2015 Bulletin 2015/39**

(51) Int Cl.:
***G01M 13/02*** *(2006.01)*

(21) Application number: **14160930.5**

(22) Date of filing: **20.03.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Areva Wind GmbH**
**27572 Bremerhaven (DE)**

(72) Inventor: **Mtauweg, Samer Dr.**
**27568 Bremerhaven (DE)**

(74) Representative: **Prinz & Partner mbB**
**Winterstrasse 2**
**22765 Hamburg (DE)**

(54) **Test unit for quantitative analysis of a contact pattern on a tooth surface of a gear, method for quantitative analysis and use of the test unit**

(57) A test unit for quantitative analysis of a contact pattern and a method for quantitative analysis are provided. The test unit comprises an optoelectronic sensor for capturing images of contact pattern paint on a tooth surface of a gear. Furthermore, the test unit comprises a control unit, which is configured for determining and storing a first distribution of an optical parameter of the contact pattern paint across the tooth surface, from the first image. This is captured prior to testing of the gear. After the tooth surface was exposed to a test load, a second image is captured and a second distribution of the optical parameter is determined. The control unit is configured to perform a quantitative analysis of a contact pattern on the tooth surface by determining a deviation between the first and the second distribution of the optical parameter.

Fig. 1

## Description

FIELD OF THE INVENTION

The invention relates to a test unit for quantitative analysis of a contact pattern on a tooth surface of a gear, in particular of a gear in a wind generator. The invention also relates to a method for quantitative analysis of a contact pattern on a tooth surface of a gear. Furthermore, the invention relates to the use of the test unit for quantitative analysis of a contact pattern on a tooth surface of a gear of a wind generator.

BACKGROUND

Generally, the tooth surfaces in gears do not contact each other at the entire tooth flank. For determination of a contact area between cooperating tooth surfaces, a contact pattern paint, which is an oil-resistant colored paint, is applied on the tooth surfaces prior to testing. The gear is subsequently exposed to a test load. The contact pattern paint is abraded due to the applied forces and a resulting contact pattern on the tooth flanks carrying the partly paint are visually inspected afterwards. Typically, the contact pattern is analyzed in a qualitative visual inspection, which is mainly based on empirical expert knowledge.

For more precise determination of the boundaries between the contact areas and the non-contact areas in the gear pattern, the gear inspection system, which is disclosed in document US 2010/0158349 A1, applies a color camera. This captures images of the tooth flanks. In the frames, the color values of pixels are determined along a predetermined line across the tooth flank. The color values for these pixels are plot as a function of the position of the pixels on said line. A gradient method is then utilized to find points of maximum slope in the curve. The method is based on the assumption that the boundaries of the contact area can be indentified with these points of maximum slope. The analysis of the contact pattern is, however, restricted to a more precise localization of the boundaries of the contact area.

SUMMARY

It is an object of the invention to provide a test unit for quantitative analysis of a contact pattern on a tooth surface. Furthermore, it is an object of the invention to provide a method for quantitative analysis of a contact pattern on a tooth surface. It is still another object of the invention to provide an advantageous use of the test unit.

In one aspect of the invention, a test unit for quantitative analysis of a contact pattern on a tooth surface of a gear is provided. The test unit is particularly suitable for inspection of a gear in a wind generator. The test unit comprises an optoelectronic sensor for capturing images of a contact pattern paint, which resides on a tooth surface of the gear. Furthermore, the test unit comprises a control unit. This is configured for determining and storing a first distribution of an optical parameter of the contact pattern paint across the tooth surface. This is performed by analyzing a first captured image. The first distribution of the optical parameter is acquired before the tooth surface is exposed to a test load. After the tooth surface was exposed to the test load, a second distribution of the optical parameter of the contact pattern paint across the tooth surface is determined and stored by the control unit. This second distribution is determined by analyzing a second image of the tooth surface, which is captured after the test run. In addition to this, the control unit is configured to perform a quantitative analysis of a contact pattern. This analysis is based on a deviation between the first and the second distribution of the optical parameter of the contact pattern paint across the tooth surface.

In other words, the first distribution of the optical parameter serves as a reference measurement. The second distribution of the optical parameter is evaluated in view of this initial reference measurement. Due to this calibration, not only a qualitative analysis but a quantitative analysis can be performed. The amount of abraded contact pattern paint can be quantified or at least estimated.

The local value of the optical parameter, for example the color intensity of the contact pattern paint, varies with the load, which is applied on the tooth surface in the particular area. Due to the quantitative analysis of the contact pattern paint, a load distribution across the tooth surface can be determined.

The test unit according to aspects of the invention is particularly advantageous for inspection of gears in wind generators. These gears are frequently inspected in the field and not under laboratory conditions. Under these circumstances, it is hardly impossible to apply the contact patter paint with superb homogeneity. On the contrary, it will be more realistic that the contact pattern paint is applied slightly inhomogeneous, i.e. its thickness will probably vary across the tooth surface.

Conventional test units, which inspect the contact pattern paint only after the tooth surface was exposed to the test load, fail to compensate for errors, which are due to initial inhomogeneities. In particular, this applies to tests, which are performed outside the lab.

The test unit according to aspects of the invention, however, performs a calibrated measurement. This is not only less prone to errors but also allows the abraded mass of contact patter paint to be determined. This leads to a true quantitative analysis of the contact pattern.

According to an embodiment of the invention, the optoelectronic sensor is a camera, in particular a digital camera, which is configured for capturing images of the tooth surface. The optoelectronic sensor can be a color sensor, in particular a color camera. This is configured to capture color images of the tooth surface. The acquired optical parameter can be for example: a color, a color intensity, a hue or a brightness of the contact pattern paint. Furthermore, the optical parameter can be a combination of two or more of the color, the color intensity, the hue or the brightness of the contact pattern paint.

Advantageously, the change of the contact pattern paint, which is due to the test load, can be analyzed using various parameters or even a combination of different parameters forming the optical parameter. The load, which is applied on the tooth surfaces, can have various effects on the individual parameters of the contact patter paint. For example, during a test run, the color of the paint can change slower than its hue or the brightness. The wide parameter space for defining the optical parameter allows a detailed analysis. The optical parameter can be tailored to the individual requirements of the gear and the test run by selecting a suitable parameter of a couple of parameters.

In an alternative embodiment of the invention, the optoelectronic sensor is a grayscale sensor; in particular it is a black and white camera. This is configured to capture grayscale images of the tooth surface. In particular, the optical parameter is a brightness of the contact pattern paint. Depending on the particular requirements in the gear test, either a color camera or a grayscale camera can be the best choice. For example, when the brightness of the contact pattern paint turns out to be the best or at least sufficient optical parameter, a black and white camera can be superior to a color camera, because it typically offers the better spatial resolution. Furthermore, a black and white camera can be more economic, when compared to a color camera having similar performance characteristics.

In particular, the test unit is a portable or mobile unit, as for example a mobile phone or handheld portable device with an integrated camera. This renders it particularly suitable for in-field testing of gears in wind generators.

In another advantageous embodiment of the invention, the control unit is further configured to determine a face load distribution across the tooth surface. This is performed by analyzing the deviation between the first and the second distribution of the optical parameter across the tooth surface. The distribution of the optical parameter can be a two-dimensional distribution. For example, a value of the face load can be considered being more or less proportional to a change in one or more of the parameters. A high deviation of the color or the brightness can for example indicate a high face load. In an ideal situation, the relative change in color or brightness is known for each individual pixel of the captured frames. This plurality of relative values is determined from the comparison between the first and the second frame. A particular value of the face load can be calculated using the values for the change of the optical parameter.

In another embodiment of the invention, a face load factor can be calculated by analyzing the deviation between the first and the second distribution of the optical parameter across the tooth surface. The face load factor is typically defined as the local maximum linear load divided by the average linear load across the tooth surface. Based on the assumption that a change of the optical parameter is at least substantially proportional to the load, the face load factor can be calculated by determining a local maximum change of the optical parameter and dividing this value by an average value of the optical parameter across the tooth surface. For restriction of the calculation to the line load, which is considered in the face load factor, the values of the optical parameter can be considered along a predetermined line on the tooth surface.

In another aspect of the invention, a method for quantitative analysis of a contact pattern on a tooth surface of a gear is provided. The method is particularly suitable for analysis of a contact pattern on a tooth surface of a gear of a wind generator. Firstly, contact pattern paint is applied on a tooth surface of the gear. Subsequently, an image of the tooth surface is captured. In this image, a first distribution of an optical parameter of the contact pattern paint across the tooth surface is determined and data relative to the distribution is stored. Subsequently, a test of the gear is performed, wherein the tooth surface is exposed to a test load. Subsequent to the gear test, a second image of the tooth surface is captured and a second distribution of the optical parameter is determined. This second distribution is also stored. A quantitative analysis of the contact pattern is performed by analyzing a deviation between the first and the second distribution of the optical parameter of the contact pattern paint across the tooth surface.

In particular, the step of capturing the image includes capturing of a digital image of the tooth surface. The captured image can be a color image or a grayscale image. When a color image is captured, the optical parameter can be a color, a color intensity, a hue or a brightness of the contact pattern paint. However, the optical parameter can also be a combination of two or more of the color, the color intensity, the hue and/or the brightness of the contact pattern paint. When a grayscale image is captured, the optical parameter is the brightness of the contact pattern paint.

In addition to this, the method according to aspects of the invention can include a determination of a quantitative face load distribution across the tooth surface. This is calculated from a deviation between the first and the second distribution of the optical parameter, which is in particular a two-dimensional distribution across the tooth surface. Furthermore, a face load factor can be determined from the deviation between the first and the second distribution of the optical parameter.

Same or similar advantages, which have been already mentioned with respect to the test unit apply to the method according to aspects of the invention in a same or similar way and are therefore not repeated.

In still another aspect of the invention, a use of the test unit for quantitative analysis of a contact pattern on a tooth surface of a gear of a wind generator is provided. Due to the fact, the test unit performs a calibrated measurement; it is particularly suitable for performing tests in wind generator. The test is typically not conducted in a lab environment and the test unit can in particular compensate for inhomogeneities of the applied contact pattern paint. Further advantages of the use of the test unit ensue from the description of the test unit and shall not be repeated.

The aspects, embodiments and/or method steps of the invention can advantageously be implemented in form of a computer program stored on a mobile device. The invention therefore also provides a computer program product implementing the aspects and features of the invention. Such a computer program is usually referred to as application (short: "app"). The respective app may be downloaded and stored on a mobile and/or portable device. The portable device may then be configured by the app in order to perform the above described aspects and embodiments of the invention. This is particularly advantageous for in-field testing.

BRIEF DESCRIPTION OF DRAWINGS

Further aspects and features of the invention ensue from the following description of preferred embodiments of the invention with reference to the accompanying drawings, wherein

FIG.1 is a simplified drawing showing a test unit according to an embodiment of the invention and

FIG. 2 is a flow chart illustrating a quantitative analysis of the contact pattern paint on a tooth surface, according to another embodiment of the invention.

DETAILED DESCRIPTION OF EXAMPLE EMBODIMENTS

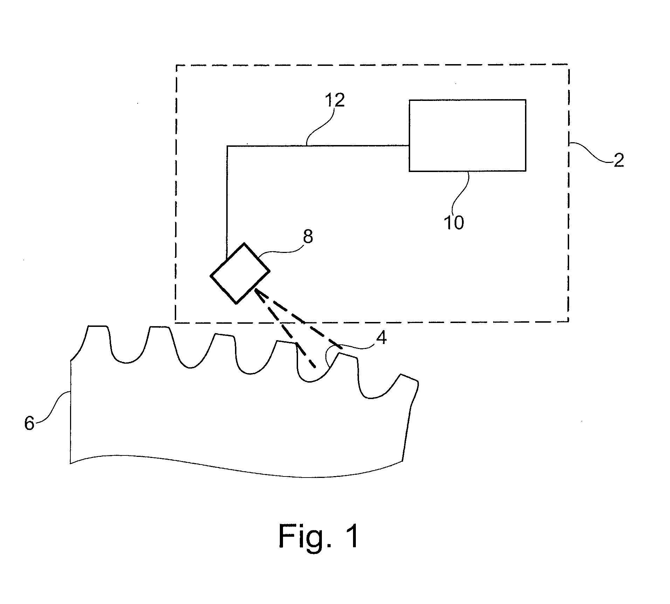

In the simplified drawing of FIG. 1, there is a test unit 2 for quantitative analysis of a contact pattern on a tooth surface 4 of a gear 6. Merely for simplification of the drawing, only a section of the gear 6 is depicted in FIG. 1. In particular, the gear 6 forms part of a wind generator.

The test unit 2 comprises an optoelectronic sensor 8 for capturing images of a contact pattern paint, which is applied on the tooth surfaces 4. In particular, the optoelectronic sensor 8 is a camera, for example a digital camera, which is configured to capture digital images of the tooth surface 4. The optoelectronic sensor 8 can be either a color sensor or a grayscale sensor. For example, a digital color camera or a black and white camera, which is either configured to capture digital color images or digital grayscale images of the tooth surface 4, respectively, can be applied.

The optoelectronic sensor 8 is coupled to a control unit 10 via a data link 12. Both, the control unit 10 and the data link 12 can be configured according to commonly applied technical standard technology, which fits best with the requirements of the test unit 2. For example, the control unit 10 can be a computer, a microcontroller or the like. The data link is a USB or FireWire link, for example.

In particular, the test unit 2 is a portable unit. For in the field testing of gears, for example a gear, which is installed in a wind generator, a portable unit fits best with the needs of the service technicians.

The analysis of the contact pattern starts with the application of a contact pattern paint on the tooth surfaces 4. This is performed prior to the test run of the gear 6. The contact pattern paint is typically an oil-resistant deeply colored paint. Conventional contact pattern paints can be applied for testing of the gear 6.

However, before the test run is performed and the tooth surfaces 4 of the gear 6 are exposed to the test load, a first image of the tooth surface 4 is captured using the optoelectronic sensor 8. The image data is communicated via the data link 12 from the optoelectronic sensor 8 to the control unit 10.

The control unit 10 is configured to analyze the image data of the captured image. This analysis can be performed with respect to various optical parameters of the contact pattern paint. Suitable optical parameters are for example: the color, the color intensity, the hue or the brightness. Naturally, this requires a color sensor. Furthermore, the optical parameter can be a combination of two or more of the named parameters. In other words, the optical parameter can be a combination of two or more of the color, the color intensity, the hue and / or the brightness of the contact pattern paint. When a grayscale sensor is applied, the optical parameter is likely to be the brightness of the contact pattern paint.

The control unit 10 determines a first distribution of the optical parameter of the contact pattern paint across the tooth surface 4. When the optical parameter is for example the brightness, a two-dimensional distribution of the brightness of the contact pattern paint across the tooth surface 4 is determined. This can be performed on a pixel-by-pixel basis. In other words, the control unit 10 stores a value of the brightness for each pixel in the captured frame. Each pixel can be assigned to a certain point or a tiny area on the surface 4 of the tooth. In other words, each pixel represents information with respect to a location on the tooth surface 4. The location of an individual pixel together with its brightness value represents one single coordinate in the two-dimensional distribution of the optical parameter. The entirety of locations of the pixels in a single frame together with brightness values, represent one possible two-dimensional distribution of the optical parameter. In a similar way, various other distributions of the optical parameter across the tooth surface 4 can be generated using one or more of the named parameters, for example the hue and/or the color intensity.

Subsequent to the acquisition and analysis of the first image, a test run is performed. The tooth surface 4 of the gear 6 is exposed to a test load. Subsequent to testing, a second image is captured using the optoelectronic sensor 8.

This second image provides the data basis for a similar analysis, which was carried out prior to testing. This reveals in a second distribution of the optical parameter, which is also stored in the control unit 10. In contrast to the first image, the second image includes data of partially abraded contact pattern paint. This is due to the load, which was applied in the test run.

The first distribution of the optical parameter, which characterizes the contact pattern paint prior to testing, and the second distribution of the optical parameter, which characterizes the contact pattern paint after testing, are now available. The control unit 10 calculates a deviation between the first and the second distribution of the optical parameter. Again, this can be performed on a pixel-by-pixel basis. For example, the values for the brightness of corresponding pixels in the first and second frame can be subtracted. In other words, a brightness difference image is determined by subtracting the brightness values of pixels having the same location.

This differential picture provides a basis for quantitative analysis of the contact pattern paint, in particular for determination of a quantitative load distribution across the tooth surface 4. In other words, the control unit 10 is configured to determine a quantitative load distribution across the tooth surface 4 from a deviation between the first and the second distribution of the optical parameter. Furthermore, a face load factor can be determined. The calculation of the face load factor will be explained in more detail further below.

The above outlined mode of operation of the control unit is advantageously applicable to various optical parameters. For example, the optical parameter can be the color, the color intensity or the hue of the contact pattern paint. Also a combination of two or more parameters can serve as the optical parameter. If more than one parameter provides the basis for the optical parameter, the individual parameters forming said optical parameter can also be weighted. The choice of the suitable parameters depends on the particular requirements and circumstances of the gear test. The combination and the weight of the parameters can be tailored to the particular requirements. As already mentioned, the optical sensor 8 can be a color sensor or a grayscale sensor. When the brightness of the contact pattern paint, for example, turns out to be the suitable optical parameter for characterizing the abrasion of the contact pattern paint, a black and white camera will be sufficient. In comparison to a color camera, a black and white camera typically offers the higher spatial resolution. This can be advantageous for some applications.

The test unit 10 according to aspects of the invention is capable of determining an amount of contact pattern paint, which is abraded from the tooth surface 4 during the test run. This is no self-evident feature since the initial distribution of the contact pattern paint is not necessarily homogeneous. Only by performing a reference measurement, i.e. the first distribution of the optical parameter, the analysis can be quantitative analysis. This is not based on absolute values but on calibrated values of the optical parameter. With this type of measurement, the influence on the contact pattern paint, which is due to testing, can be filtered out.

The calibrated measurement enables the control unit 10 to perform a quantitative analysis. Based on the assumption that a load on a particular area on the tooth surface 4 is substantially proportional to a change in one or more of the optical parameters of the contact pattern paint in said area, the load distribution across the tooth surface 4 can be determined. When a certain area of the tooth surface 4 is subject to a high load, the contact pattern paint is expected to be heavily abraded. This will significantly change the optical parameter in this particular area. In other words, areas showing a high change in brightness, for example, are assumed to be exposed to a high load.

Based on information with respect to a difference between the first and second distribution of the optical parameter, a face load factor can be calculated. Generally, the face load factor is defined as:

$$K_{H\beta} = \frac{\left(Fm/_b\right)_{max}}{Fm/_b},$$

wherein $Fm/_b$ is the average linear load across the tooth surface and $\left(Fm/_b\right)_{max}$ is a local maximum linear load.

The face load factor is dimensionless. It is calculated from the relation between the average linear load and the local maximum linear load. Starting with the above-mentioned assumption that the load is more or less proportional to a change in the optical parameter, the color or brightness values, for example, will equal the local load on the tooth surface 4 multiplied by a scale factor. By analyzing the optical parameter along a predetermined line across the tooth surface 4, a value, which is proportional to the average linear load along this particular line, can be calculated. Similarly, the value of the local maximum linear load (multiplied by the identical scale factor) can be determined from the deviation of the optical parameter. When the face load factor is determined using the above formula, the scale factors cancel out.

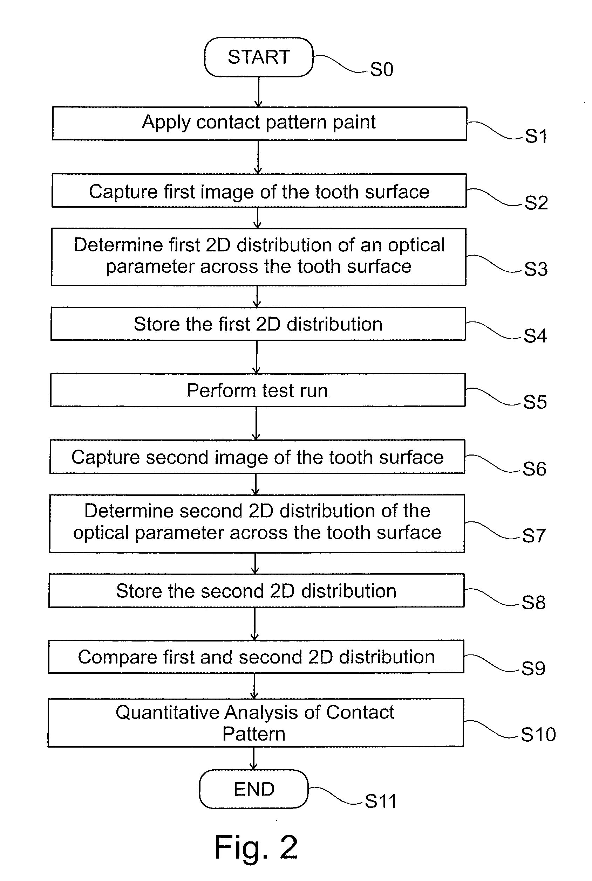

In FIG. 2, there is a flow chart illustrating a method for quantitative analysis of a contact pattern on a tooth surface in a gear 6, according to an embodiment of the invention.

The method starts (step S0) with the application of contact pattern paint on the tooth flanks or tooth surfaces 4 of the gear 6 (step S1). A first image of the tooth surface 4 is subsequently captured (step S2). The image data is communicated from the optoelectronic sensor 8 via the data link 12 to the control unit 10. A first two-dimensional distribution of an optical parameter, for example the brightness or the color of the contact pattern paint, is determined (step S3). This first distribution of the optical parameter is stored (step S4). Subsequently, a test run is performed. The tooth surfaces 4 of the gear 6 are exposed to a test load (step S5). After the test run, a second image of the tooth surface 4 is captured using the optoelectronic sensor 8 (step S6). The image data is again communicated via the data link 12 to the control unit 10. A second two-dimensional distribution of the optical parameter is determined (step S7). This is stored in the control unit 10 (step S8). Subsequently, the first and the second distribution of the optical parameter, which characterize the contact pattern paint prior and after testing, are compared (step S9). The deviation between the first and second two-dimensional distribution of the optical parameter, provides a basis for a quantitative analysis of the contact pattern (step S10). For example, a load distribution across the tooth surface 4 or a face load factor can be calculated (step S10). If no further measurement is desired, the method stops in step S11.

Although the invention has been described hereinabove with reference to specific embodiments, it is not limited to these embodiments and no doubt further alternatives will occur to the skilled person that lie within the scope of the invention as claimed.

**Claims**

1. A test unit for quantitative analysis of a contact pattern on a tooth surface of a gear, in particular a test unit for a gear of a wind generator, wherein the test unit comprises:

   a) an optoelectronic sensor for capturing images of a contact pattern paint on a tooth surface of the gear,
   b) a control unit, which is configured for determining and storing a first distribution of an optical parameter of the contact pattern paint across the tooth surface from a first image, which is captured before the tooth surface is exposed to a test load, and for determining and storing a second distribution of the optical parameter of the contact pattern paint across the tooth surface from a second image, which is captured after the tooth surface is exposed to the test load, **characterized in that**
   c) the control unit is further configured to perform a quantitative analysis of a contact pattern on the tooth surface by determining a deviation between the first and the second distribution of the optical parameter of the contact pattern paint across the tooth surface.

2. The test unit according to claim 1, wherein the optoelectronic sensor is a camera, in particular a digital camera, which is configured for capturing images of the tooth surface.

3. The test unit according to claim 1 or 2, wherein the optoelectronic sensor is a color sensor, in particular a color camera, which is configured to capture color images of the tooth surface, and wherein the optical parameter is a color, a color intensity, a hue or a brightness of the contact pattern paint or the optical parameter is a combination of two or more of a color, a color intensity, a hue or a brightness of the contact pattern paint.

4. The test unit according to claim 1 or 2, wherein the optoelectronic sensor is a grayscale sensor, in particular a black and white camera, which is configured to capture grayscale images of the tooth surface, and wherein the optical parameter is a brightness of the contact pattern paint.

5. The test unit according to anyone of the preceding claims, wherein the control unit is further configured to determine a face load distribution across the tooth surface from the deviation between the first and the second distribution of the optical parameter.

6. The test unit according to anyone of the preceding claims, wherein the control unit is further configured to determine a face load factor of the tooth surface from the deviation between the first and the second distribution of the optical parameter.

7. The test unit according to anyone of the preceding claims, wherein the test unit is a portable device.

8. A method for quantitative analysis of a contact pattern on a tooth surface of a gear, in particular of a gear of a wind generator, the method comprising the steps of

   a) applying a contact pattern paint on a tooth surface of the gear,
   b) capturing a first image of the tooth surface,
   c) determining and storing a first distribution of an optical parameter of the contact pattern paint across the tooth surface, from the first image,
   d) performing a test of the gear, wherein the tooth surface is exposed to a test load,
   e) subsequently capturing a second image of the tooth surface,
   f) determining a second distribution of the optical parameter of the contact pattern paint across the tooth surface, from the second image,
   wherein the method is **characterized by the step of**
   g) performing a quantitative analysis of a contact pattern on the tooth surface by determining a deviation between the first and the second distribution of the optical parameter of the contact pattern paint across the tooth surface.

9. The method according to claim 8, wherein the step of capturing the image includes capturing of a digital image of the tooth surface.

10. The method according to claim 8 or 9, wherein the captured image is a color image and the optical parameter is a color, a color intensity, a hue or a brightness of the contact pattern paint or the optical parameter is a combination of two or more of a color, a color intensity, a hue or a brightness of the contact pattern paint.

11. The method according to claim 8 or 9, wherein the captured image is a grayscale image and the optical parameter is a brightness of the contact pattern paint.

12. The method according to anyone of claims 8 to 11, wherein the step of performing the quantitative analysis further includes determining a face load across the tooth surface from a deviation between the first and the second distribution of the optical parameter.

13. The method according to anyone of claims 8 to 12, wherein the step of performing the quantitative analysis further includes determining a face load factor from the deviation between the first and the second two-dimensional distribution of the optical parameter.

14. A portable or mobile device being configured to perform the method according to claims 8 to 13.

15. Use of the test unit according to anyone of claims 1 to 7 for quantitative analysis of a contact pattern on a tooth surface of a gear of a wind generator.

Fig. 1

START — S0

↓

Apply contact pattern paint — S1

↓

Capture first image of the tooth surface — S2

↓

Determine first 2D distribution of an optical parameter across the tooth surface — S3

↓

Store the first 2D distribution — S4

↓

Perform test run — S5

↓

Capture second image of the tooth surface — S6

↓

Determine second 2D distribution of the optical parameter across the tooth surface — S7

↓

Store the second 2D distribution — S8

↓

Compare first and second 2D distribution — S9

↓

Quantitative Analysis of Contact Pattern — S10

↓

END — S11

## Fig. 2

Europäisches
Patentamt

European
Patent Office

Office européen
des brevets

# EUROPEAN SEARCH REPORT

Application Number

EP 14 16 0930

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2009 023722 A1 (BAYERISCHE MOTOREN WERKE AG [DE]) 9 December 2010 (2010-12-09) * abstract * * the whole document * | 1-15 | INV. G01M13/02 |
| A,D | US 2010/158349 A1 (GEORGE SHERI [IN] ET AL) 24 June 2010 (2010-06-24) * the whole document * | 1-15 | |

TECHNICAL FIELDS
SEARCHED       (IPC)

G01M

The present search report has been drawn up for all claims

| Place of search | Date of completion of the search | Examiner |
|---|---|---|
| The Hague | 26 September 2014 | Daman, Marcel |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 14 16 0930

This annex lists the patent family members relating to the patent documents cited in the above-mentioned European search report.
The members are as contained in the European Patent Office EDP file on
The European Patent Office is in no way liable for these particulars which are merely given for the purpose of information.

26-09-2014

| Patent document cited in search report | Publication date | Patent family member(s) | | Publication date |
|---|---|---|---|---|
| DE 102009023722 A1 | 09-12-2010 | NONE | | |
| US 2010158349 A1 | 24-06-2010 | CN | 102265131 A | 30-11-2011 |
| | | DE | 112009003835 T5 | 27-06-2013 |
| | | US | 2010158349 A1 | 24-06-2010 |
| | | WO | 2010074874 A1 | 01-07-2010 |

EPO FORM P0459

For more details about this annex : see Official Journal of the European Patent Office, No. 12/82

**EP 2 921 840 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100158349 A1